# FASCICULE DE BREVET EUROPEEN

(11) **EP 1 476 064 B1**
(45) Date de publication et mention de la délivrance du brevet: **22.03.2006**
(21) Numéro de dépôt: 03715057.0
(22) Date de dépôt: 28.01.2003
(51) Int. Cl.: A47J 45/07

(54) **POIGNEE AMOVIBLE POUR USTENSILE DE CUISSON**
ENTFERNBARER GRIFF FÜR EIN KOCHUTENSIL
DETACHABLE HANDLE FOR A COOKING UTENSIL

(30) Priorité: 29.01.2002 FR 0201024
(43) Date de publication de la demande: 17.11.2004
(73) Titulaire: CRISTEL, 25490 Fesches le Chatel (FR)
(72) Inventeur: DODANE, Paul, F-25400 EXINCOURT (FR)
(74) Mandataire: Barbin le Bourhis, Joel
(86) Numéro de dépôt international: PCT/FR2003/000258
(87) Numéro de publication internationale: WO 2003/063667

(56) Documents cités:
- DE-A- 2 510 894
- FR-A- 2 802 074
- US-B1- 6 250 493
- PATENT ABSTRACTS OF JAPAN vol. 2000, no. 20, 10 juillet 2001 (2001-07-10) & JP 2001 061679 A (MIYAZAKI SEISAKUSHO:KK), 13 mars 2001 (2001-03-13)

## Description

L'invention concerne un dispositif de préhension amovible pour ustensile de cuisson, comme connu par le clocument US 6 250 493.

Elle concerne plus précisément un dispositif de préhension pour un ustensile de cuisson qui présente au moins une anse recourbée vers l'extérieur et dans laquelle est ménagée une lumière sensiblement parallèle au bord interne de l'anse, ledit dispositif comportant une poignée constituée d'un tube, d'un boîtier partiellement emmanché dans l'extrémité avant dudit tube, d'un culot disposé à l'extrémité arrière dudit tube et de moyens pour fixer ledit boîtier et ledit culot sur ledit tube, un bec à double cambrage prévu à l'extrémité avant du boîtier et susceptible d'être introduit dans la lumière de l'anse par le dessus, un organe de verrouillage/déverrouillage monté sur le boîtier de manière à pouvoir coulisser dans la direction de l'axe de ladite poignée et qui présente un poussoir de commande disposé sur la face supérieure dudit boîtier, un verrou destiné à coopérer avec le bord externe de l'anse et disposé sur la face inférieure dudit boîtier et un coulisseau reliant ledit poussoir audit verrou, et des moyens élastiques disposés dans ledit boîtier et destinés à repousser ledit organe de verrouillage/déverrouillage vers le bec.

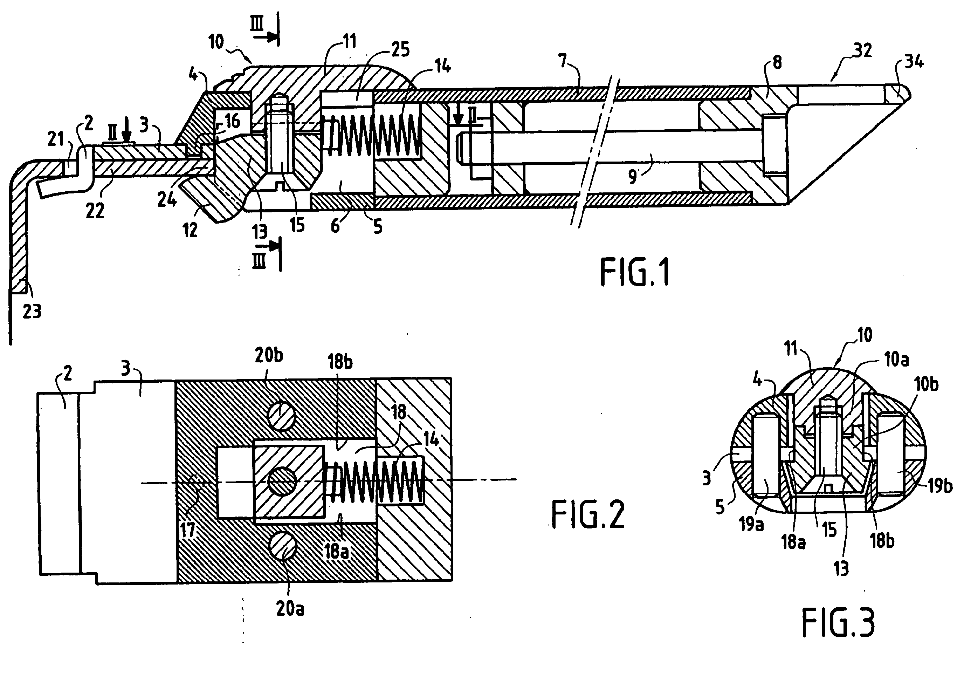

Les figures 1 à 3 montrent une poignée de préhension 1, selon l'état de la technique, qui présente à l'avant un bec 2 à double cambrage formé à l'extrémité d'une plaque 3 dont l'autre extrémité est retenue entre la partie supérieure 4 et la partie inférieure 5 d'un boîtier 6 partiellement emmanché dans l'extrémité avant d'un tube 7. Le tube 7 est obturé à l'autre extrémité par un culot 8 rigidement relié au boîtier 6 par une tige 9. Sur le boîtier 6, est monté un organe de verrouillage/déverrouillage 10 qui présente un poussoir de commande 11 disposé sur la face supérieure de la partie supérieure 4 du boîtier 6, un verrou 12 disposé sur la face inférieure du boîtier 6, et un coulisseau 13 qui relie le poussoir de commande 10 au verrou 11. Un ressort hélicoïdal 14 est disposé dans le boîtier 6 et est en appui sur le fond du boîtier 6 et sur le coulisseau 13 et tend à repousser l'organe de verrouillage/déverrouillage vers le bec 2. Ainsi que cela est montré sur les figures 1 et 3, l'organe de verrouillage/déverrouillage 10 est constitué de deux pièces 10a, 10b jointes selon le plan horizontal traversant le coulisseau 13 par une vis 15. La plaque 3 est retenue axialement par rapport au boîtier 6 au moyen d'un picot 16 formé sur la partie supérieure 4 du boîtier 6 et logeant dans un orifice 17 ménagé dans la plaque 3. Cette plaque 3 comporte en outre une échancrure 18 dont les bords latéraux 18a et 18b forment les moyens de guidage de l'organe de verrouillage/déverrouillage 10 dans la direction de l'axe de la poignée 1. La partie supérieure 4 et la partie inférieure 5 du boîtier 6 sont fixées entre elles par deux vis 19a et 19b qui traversent des orifices 20a et 20b, ménagés dans la plaque 3.

Le bec 2 est destiné à être introduit par le dessus dans une lumière 21 formée dans une anse recourbée 22 vers l'extérieur et fixée sur la paroi périphérique 23 d'un ustensile de cuisson et le verrou 12 est destiné à coopérer avec le bord externe 24 de l'anse 22.

Pour monter la poignée de préhension 1 décrite ci-dessus, on procède de la manière suivante :

On positionne la plaque 3 sous la partie supérieure 4 du boîtier 6 en introduisant le picot 16 dans l'orifice 17., On place ensuite la pièce inférieure 10b de l'organe de verrouülage/déverrouillage 10 sous la plaque 3 et partiellement à travers l'échancrure 18 de la plaque 3. On positionne ensuite la partie inférieure 5 du boîtier 6 et on la fixe à la partie supérieure 4 par les vis 19a et 19b. On introduit ensuite le ressort 14 dans le boîtier 6 par l'ouverture supérieure 25 du boîtier 6, et on le positionne correctement. On monte ensuite la pièce supérieure 10a de l'organe de verrouillage/déverrouillage 10 et on la fixe à la pièce inférieure 10b par la vis 15. On emmanche ensuite la partie arrière du boîtier 6 dans l'extrémité avant du tube 7, cette extrémité avant obturant en partie l'ouverture supérieure 25 du boîtier 6. Enfin, on place le culot 8 à l'autre extrémité du tube 7, et on serre la tige 9.

Ainsi que cela est décrit ci-dessus, la partie antérieure fixe de la poignée 6 comporte cinq pièces, à savoir la plaque 3, la partie supérieure 4 et la partie inférieure 5 du boîtier 6 et les deux vis 19a et 19b, et l'organe de verrouillage/déverrouillage 10 comporte trois pièces, à savoir, la pièce supérieure 10a, la pièce inférieure 10b, et la vis 15. L'assemblage de ces différentes pièces est relativement compliqué et il ne faut pas oublier de positionner le ressort 14 avant de placer la pièce supérieure 10a de l'organe de verrouillage/déverrouillage 10.

Partant de cet état de la technique, le but de l'invention est de proposer un dispositif de préhension, fonctionnellement identique, qui soit d'un montage plus simple.

L'invention atteint son but par le fait que :
a) l'organe de verrouillage/déverrouillage est monobloc,
b) le boîtier et le bec sont réalisés en une seule pièce monobloc,
c) le boîtier présente sur sa face supérieure une première ouverture dont la partie arrière est plus large que la partie avant afin de permettre le passage du verrou et du coulisseau lors du montage,
d) le boîtier présente sur sa face inférieure une deuxième ouverture qui s'étend vers l'arrière pour permettre le montage des moyens élastiques,
e) la glissière du coulisseau est constituée au moins en partie par les bords latéraux en vis-à-vis de la partie avant de la première ouverture qui coopèrent avec des rainures longitudinales ménagées dans le coulisseau, et
f) la partie arrière du boîtier est emmanchée dans l'extrémité avant du tube de telle manière que la deuxième ouverture est partiellement obturée par le tube afin de limiter le déplacement axial de l'organe de verrouillage/ déverrouillage et de retenir ce dernier sur ledit boîtier.

Ainsi, la partie antérieure fixe du dispositif proposé comporte une seule pièce au lieu de cinq pièces, l'organe de verrouillage/déverrouillage comporte une seule pièce au lieu de trois pièces, et les moyens élastiques sont placés après le montage de l'organe de verrouillage/déverrouillage sur la partie antérieure fixe.

Avantageusement, l'extrémité avant du tube comporte sur sa face supérieure une échancrure dont les bords latéraux sont dans le prolongement des bords latéraux de la partie avant de la première ouverture.

Cette disposition permet d'assurer la continuité de la glissière sur tout le chemin de déplacement axial du coulisseau.

D'autres caractéristiques et avantages de l'invention ressortiront à la lecture de la description suivante faite à titre d'exemple et en référence aux dessins annexés dans lesquels :
- la figure 1 est une vue en coupe selon un plan médian vertical d'une poignée de préhension amovible selon l'état de la technique,
- la figure 2 est une coupe, selon la ligne brisée II-II de la figure 1, de la poignée selon l'état de la technique,
- la figure 3 est une coupe transversale de la même poignée prise selon la ligne III-III de la figure 1,
- la figure 4 est une coupe selon un plan médian vertical d'un dispositif de préhension d'un ustensile de cuisson selon l'invention,
- la figure 5 est une vue de dessus du dispositif de préhension de la figure 4,
- la figure 6 est une vue en perspective de l'organe de verrouillage/déverrouillage du dispositif de préhension de la figure 4,
- la figure 7 est une vue en perspective de la partie antérieure monobloc du dispositif de préhension selon l'invention,
- la figure 8 est une vue de dessus de la partie antérieure monobloc du dispositif de préhension de la figure 7,
- la figure 9 est une vue de dessous de la partie antérieure monobloc de la figure 7, et
- la figure 10 est une vue de dessus de la partie avant du dispositif de préhension, dans laquelle le poussoir de commande a été arraché par souci de clarté.

L'état de la technique, illustré par les figures 1 à 3 a été décrit en détail dans l'introduction et ne mérite pas d'autres explications.

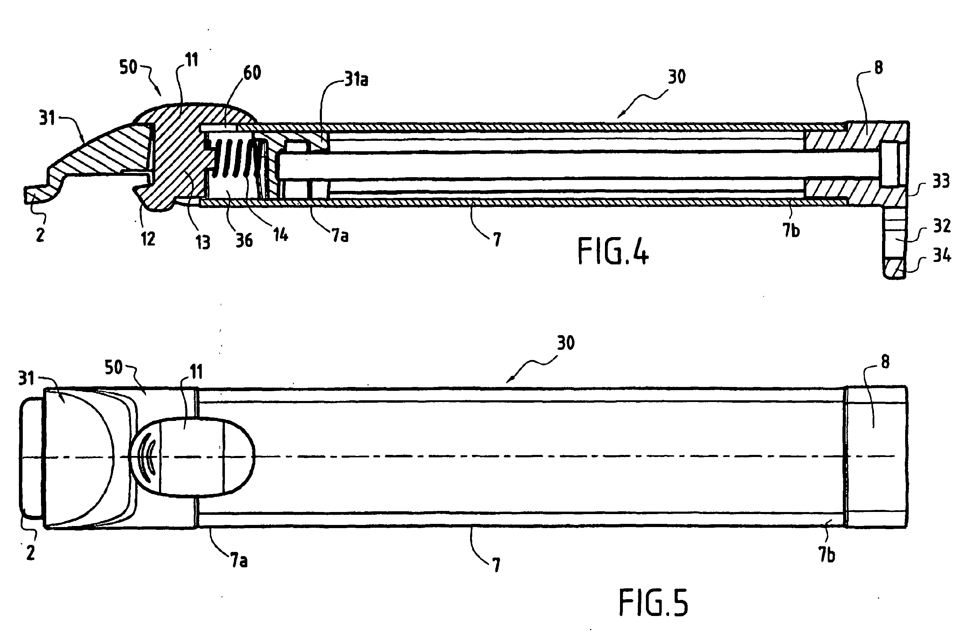

Les figures 4 à 10 montrent un dispositif de préhension 30 d'un ustensile de cuisson, selon l'invention, qui comporte un tube 7 à l'extrémité avant 7a duquel est emmanchée la partie arrière 31a d'un boîtier monobloc 31 terminé à l'avant par un bec 2 à double cambrage. Le bec 2 à double cambrage est destiné à être introduit par le dessus dans une lumière 21 ménagée dans une anse recourbée 22 équipant le récipient 23 d'un ustensile de cuisson. Dans l'autre extrémité 7b du tube 7 est emmanché en partie un culot 8 qui comporte un orifice 32 pour la suspension du dispositif 30 sur un crochet. Le culot 8 montré sur la figure 4 est différent de celui montré sur la figure 1, mais il pourrait être identique à ce dernier. Le culot 8 est solidarisé au boîtier monobloc 31 par une tige 9.

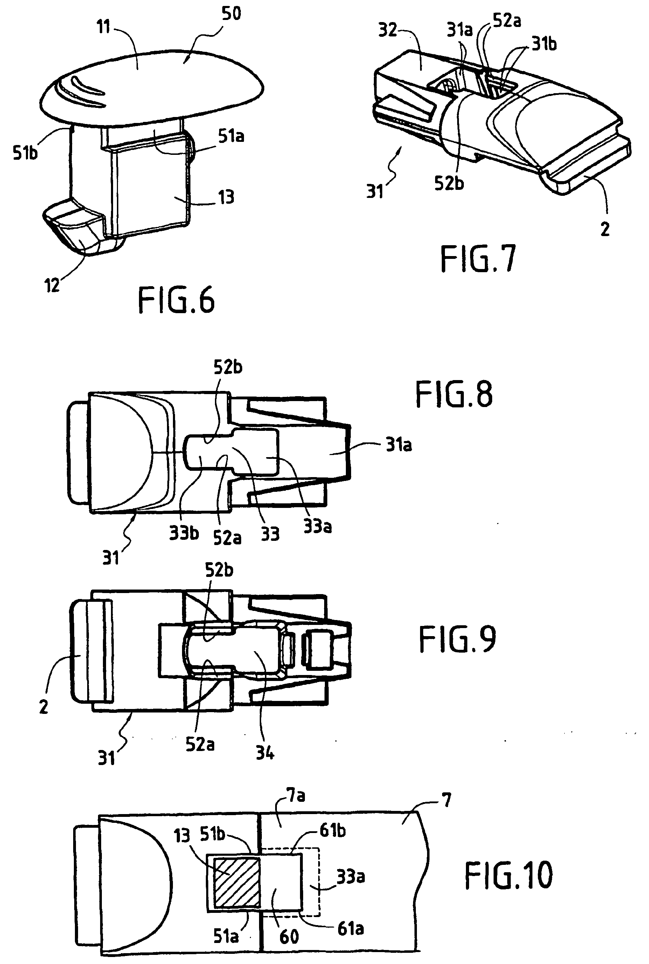

Le boîtier monobloc 31 présente sur sa face supérieure une première ouverture 33 qui présente une partie arrière 33a plus large que la partie avant 33b ainsi que cela se voit clairement sur la figure 8. Il présente sur sa face inférieure une deuxième ouverture 34 qui s'étend vers l'arrière et qui est partiellement obturé par l'extrémité avant 7a du tube 7 ainsi que cela se voit sur la figure 4. Une cavité interne 36 est ménagée dans le boîtier monobloc 31 entre la première ouverture 33 et la deuxième ouverture 34.

Cette cavité 36 est destinée à loger de manière coulissante le coulisseau 13 d'un organe de verrouillage/déverrouillage 50 monobloc, qui relie un poussoir de commande 11 à un verrou 12. Le poussoir de commande 11 est destiné à être disposé au-dessus de la face supérieure du boîtier monobloc 31 et à recouvrir la première ouverture 33, tandis que le verrou 12 qui émerge sous la face inférieure du boîtier monobloc 31 par la deuxième ouverture 34 est destiné à coopérer avec le bord 24 de l'anse recourbée 22.

Les dimensions de la partie arrière 33a de la première ouverture 33 sont calculées de telle manière que le verrou 12 et le coulisseau 13 de l'organe de verrouillage/déverrouillage 50 peuvent passer par cette partie arrière 33a lors du montage de l'organe de verrouillage/déverrouillage 50 sur le boîtier monobloc 31. Les rainures latérales supérieures 51a et 51b ménagées dans le coulisseau 13 sont destinées à coopérer avec les bords 52a, 52b de la partie avant 33b de la première ouverture 33 pour former une glissière.

Lorsqu'on a introduit le verrou 12 et le coulisseau 13 par la partie arrière 33a de la première ouverture 33, les bords 52a et 52b de la partie avant 33b se trouvent dans le prolongement des rainures 51a et 51b.

On peut alors faire coulisser l'organe de verrouillage/déverrouillage 50 vers l'avant du boîtier monobloc 31. Dans cette position, il est possible de monter le ressort hélicoïdal 14 dans la cavité 36 à l'arrière de l'organe de verrouillage/déverrouillage 50, en appui contre le fond de cette cavité et la face arrière du coulisseau 13 en l'introduisant par la deuxième ouverture 34.

Après emmanchement de la partie arrière 31a du boîtier monobloc 31 dans l'extrémité avant 7a du tube 7, la partie arrière de la deuxième ouverture 34 est obturée par l'extrémité avant 7a du tube 7, ce qui limite le déplacement axial de l'organe de verrouillage/déverrouillage 50.

Ainsi que cela est clairement montré sur la figure 10, la face supérieure de l'extrémité avant 7a du tube 7 présente une échancrure 60, au-dessus de la partie arrière 33a de la première ouverture 33, dont les bords latéraux 61a et 61b sont dans le prolongement des bords latéraux 52a et 52b de la partie avant 33b de la première ouverture 33. Ces bords latéraux 61a et 61b coopèrent avec les rainures 51a et 51b de l'organe de verrouillage/déverrouillage monobloc 50 lorsque l'opérateur repousse du doigt le poussoir de commande 11 vers l'arrière, ce qui retient positivement l'organe de verrouillage/déverrouillage monobloc sur le boîtier 31.

La figure 1 montre un culot 8 classique qui présente autour de l'orifice 32 une boucle 34 située dans le prolongement du tube 7.

Le culot 8 montré sur la figure 4 se termine par une face d'extrémité 33 plane perpendiculaire à l'axe du tube 7. La boucle 34 entourant l'orifice 32 est ainsi disposée latéralement au tube 7 et de préférence du côté du bec 2. Cette disposition avantageuse permet de poser verticalement le dispositif de préhension sur un plan de travail horizontal, la face d'extrémité 33 reposant sur ledit plan, ledit dispositif occupant alors peu de place.

Selon une autre variante du culot 8, le culot 8 comporte une boucle 34 rabattable entre deux positions extrêmes : une première position dans le prolongement du tube 7, comme pour un culot classique, et une deuxième position rabattue à 90°, dans laquelle le dispositif de préhension peut être maintenu en position verticale sur une surface horizontale.

## Revendications

1. Dispositif de préhension pour un ustensile de cuisson qui présente au moins une anse recourbée vers l'extérieur et dans laquelle est ménagée une lumière sensiblement parallèle au bord interne de l'anse, ledit dispositif comportant une poignée constituée d'un tube, d'un boîtier partiellement emmanché dans l'extrémité avant dudit tube, d'un culot disposé à l'extrémité arrière dudit tube et de moyens pour fixer ledit boîtier et ledit culot sur ledit tube, un bec à double cambrage prévu à l'extrémité avant du boîtier et susceptible d'être introduit dans la lumière de l'anse par le dessus, un organe de verrouillage/déverrouillage monté sur le boîtier de manière à pouvoir coulisser dans la direction de l'axe de ladite poignée et qui présente un poussoir de commande disposé sur la face supérieure dudit boîtier, un verrou destiné à coopérer avec le bord externe de l'anse et disposé sur la face inférieure dudit boîtier et un coulisseau reliant ledit poussoir audit verrou, et des moyens élastiques disposés dans ledit boîtier et destinés à repousser ledit organe de verrouillage/déverrouillage vers le bec,
**caractérisé par le fait que** :
a) l'organe de verrouillage/déverrouillage (50) est monobloc,
b) le boîtier et le bec sont réalisés en une seule pièce monobloc (31),
c) le boîtier présente sur sa face supérieure une première ouverture (33) dont la partie arrière (33a) est plus large que la partie avant (33b) afin de permettre le passage du verrou (12) et du coulisseau (13) lors du montage,
d) le boîtier présente sur sa face inférieure une deuxième ouverture (34) qui s'étend vers l'arrière pour permettre le montage des moyens élastiques (14),
e) la glissière du coulisseau est constituée au mois en partie par les bords latéraux (52a, 52b) en vis-à-vis de la partie avant (33b) de la première ouverture (33) qui coopèrent avec des rainures (51a, 51b) longitudinales ménagées dans le coulisseau (13), et
f) la partie arrière (31a) du boîtier (31) est emmanchée dans l'extrémité avant (7c) du tube (7) de telle manière que la deuxième ouverture (34) est partiellement obturée par le tube (7) afin de limiter le déplacement axial de l'organe de verrouillage/déverrouillage (50) et de retenir ce dernier sur ledit boîtier (31).

2. Dispositif selon la revendication 1, **caractérisé par le fait que** l'extrémité avant (7a) du tube (7) comporte sur sa face supérieure une échancrure (60) dont les bords latéraux (61a, 61b) sont dans le prolongement des bords latéraux (52a, 52b) de la partie avant (33b) de la première ouverture (33).

3. Dispositif selon l'une des revendications 1 ou 2, **caractérisé par le fait que** le culot (8) comporte une boucle (34) latérale et une face d'extrémité (33) plane permettant de poser ledit dispositif à la verticale sur une surface horizontale.

4. Dispositif selon la revendication 3, **caractérisé par le fait que** la boucle (34) est montée rabattable sur le culot (8) entre ladite position latérale et une deuxième position dans laquelle la boucle (34) est dans le prolongement du tube (7).

## Claims

1. Holding device for a cooking utensil which presents at least an outwardly bent handle in which an aperture is formed substantially parallel with the inside edge of the handle, the said device including a hand-grip formed of a tube, of a housing partially fitted in the front end of the said tube, of a cap arranged at the rear end of the said tube and means for fixing the said housing and the said cap onto the said tube, a protrusion with a double bend provided at the front end of the housing and able to be introduced into the aperture in the handle from above, a locking/unlocking organ so mounted on the housing as to be able to slide in the direction of the axis of the said hand-grip and which presents an operating button arranged on the upper face of the said housing, a bolt intended to co-operate with the outside edge of the handle and arranged on the lower face of the said housing and a slide-block connecting the said button to the said bolt, and elastic means arranged in the said housing and intended to push the said locking/unlocking organ towards the protrusion,
**characterised by** the fact that:
a) the locking/unlocking organ (50) is in one piece,
b) the housing and the projection are formed in one piece (31),
c) on its upper face, the housing presents a first opening (33) the rear part (33a) of which is wider than the front part (33b) in order to allow passage of the bolt (12) and of the slide-block (13) on assembly,
d) on its lower face the housing presents a second opening (34) which extends rearwardly to allow mounting of the elastic means (14),
e) the slide-way of the slide-block is at least partially formed by the facing lateral edges (52a, 52b) of the front part (33b) of the first opening (33) which co-operates with longitudinal grooves (51a, 51b) formed in the slide-block (13), and
f) the rear part (31a) of the housing (31) is fitted into the front end (7c) of the tube (7) in such a way that the second opening (34) is partially closed by the tube (7) in order to limit the axial displacement of the locking/unlocking organ (50) and to retain this on the said housing (31).

2. Device as described in claim 1, **characterised by** the fact that the front end (7a) of the tube (7) includes on its upper face a notch (60) the lateral edges (61a, 61b) of which are in the extension of the lateral edges (52a, 52b) of the front part (33b) of the first opening (33).

3. Device as described in one of claims 1 or 2, **characterised by** the fact that the cap (8) includes a lateral loop (34) and a flat end face (33) allowing the said device to be placed vertically on a horizontal surface.

4. Device as described in claim 3, **characterised by** the fact that the loop (34) is mounted able to be folded on the cap (8) between the said lateral position and a second position in which the loop (34) is in the extension of the tube (7).

## Patentansprüche

1. Vorrichtung zum Greifen von Kochgeschirr, das wenigstens einen nach außen gekrümmten Haltegriff aufweist, in dem eine Öffnung angebracht ist, die im Wesentlichen parallel zum inneren Rand des Haltegriffs verläuft, wobei die Vorrichtung einen Griff aufweist, der gebildet ist aus einem Rohr, einem Gehäuse, das teilweise im vorderen Ende des Rohres angeschaftet ist, einem Sockel, der am hinteren Ende des Griffs angebracht ist und Mittel zum Befestigen des Gehäuses und des Sockels auf dem Rohr, eine Zunge mit doppelter Krümmung, die am vorderen Ende des Gehäuses vorgesehen ist und in die Öffnung des Haltegriffs von oben eingeführt werden kann, ein Element zum Verriegeln/Entriegeln, das an dem Gehäuse so befestigt ist, dass es in Richtung der Achse des Griffs gleiten kann und das einen Steuerungsdrücker aufweist, der auf der Oberseite des Gehäuses angebracht ist, einen Riegel, der bestimmt ist, mit dem äußeren Rand des Haltegriffs zusammenzuwirken und auf der Unterseite des Gehäuses angebracht ist und einen Schieber, der den Drücker mit dem Riegel verbindet, und elastische Mittel, die in dem Gehäuse angeordnet sind und das Element zum Verriegeln/Entriegeln zu der Zunge zurückschieben sollen, **gekennzeichnet durch** die Tatsache, dass
a) das Element zum Verriegeln/Entriegeln (50) einstückig ist,
b) das Gehäuse und die Zunge aus einem einzigen einstückigen Teil (31) hergestellt sind,
c) das Gehäuse auf seiner Oberseite eine erste Öffnung (33) aufweist, deren Hinterteil (33a) breiter ist als das Vorderteil (33b), um den Durchtritt des Riegels (12) und des Schiebers (13) beim Montieren zu ermöglichen,
d) das Gehäuse auf seiner Unterseite eine zweite Öffnung (34) aufweist, die sich nach hinten erstreckt, um das Montieren der elastischen Mittel (14) zu ermöglichen,
e) die Gleitfläche des Schiebers wenigstens teilweise **durch** die Seitenränder (52a, 52b) gegenüber dem Vorderteil (33b) der ersten Öffnung (33) gebildet ist, die mit Längsrillen (51a, 51b), die in dem Schieber (13) angebracht sind, zusammenwirken,
f) das Hinterteil (31a) des Gehäuses (31) im vorderen Ende (7c) des Rohres (7) angeschaftet ist, derart, dass die zweite Öffnung (34) teilweise **durch** das Rohr (7) verschlossen ist, um die axiale Bewegung des Elements zum Verriegeln/Entriegeln (50) zu begrenzen und letzteres auf dem Gehäuse (31) zu halten.

2. Vorrichtung nach Anspruch 1, **gekennzeichnet durch** die Tatsache, dass das vordere Ende (7a) des Rohrs (7) auf seiner Oberseite eine Einbuchtung (60) aufweist, deren Seitenränder (61a, 61b) in der Verlängerung der Seitenränder (52a, 52b) des Vorderteils (33b) der ersten Öffnung liegen.

3. Vorrichtung nach einem der Ansprüche 1 oder 2, **gekennzeichnet durch** die Tatsache, dass der Sockel (8) eine seitliche Schleife (34) und eine ebene Endseite (33) aufweist, die das Platzieren der Vorrichtung in der Vertikalen auf einer horizontalen Fläche ermöglicht.

4. Vorrichtung nach Anspruch 3, **gekennzeichnet durch** die Tatsache, dass die Schleife (34) auf dem Sockel (8) klappbar zwischen der seitlichen Stellung und einer zweiten Stellung, in der die Schleife (34) in der Verlängerung des Rohres (7) ist, befestigt ist.
